(19) Europäisches Patentamt
European Patent Office
Office européen des brevets

(11) **EP 2 102 921 B1**

(12) **EUROPEAN PATENT SPECIFICATION**

(45) Date of publication and mention of the grant of the patent:
**02.06.2021 Bulletin 2021/22**

(21) Application number: **07808967.9**

(22) Date of filing: **13.09.2007**

(51) Int Cl.:
*H02N 2/00* (2006.01)   *H02N 2/10* (2006.01)

(86) International application number:
**PCT/UA2007/000054**

(87) International publication number:
**WO 2008/057061 (15.05.2008 Gazette 2008/20)**

(54) **PIEZOELECTRIC GENERATOR OF MECHANICAL VIBRATIONS, AND PIEZOELECTRIC MOTOR BASED THEREON**

PIEZOELEKTRISCHER GENERATOR VON MECHANISCHEN SCHWINGUNGEN UND DARAUF BASIERENDER PIEZOELEKTRISCHER MOTOR

GÉNÉRATEUR PIÉZOÉLECTRIQUE DE VIBRATIONS MÉCANIQUES, ET MOTEUR PIÉZOÉLECTRIQUE BASÉ SUR CELUI-CI

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **09.11.2006 UA 2006011804**

(43) Date of publication of application:
**23.09.2009 Bulletin 2009/39**

(73) Proprietor: **Discovery Technology International, Inc.**
**Sarasota, FL 34238 (US)**

(72) Inventors:
• **LAVRINENKO, Vyacheslav**
  **Kiev, 02206 (UA)**
• **KOVAL, Vitalii**
  **Kiev, 03049 (UA)**

(74) Representative: **Marks & Clerk France**
**Immeuble "Visium"**
**22, avenue Aristide Briand**
**94117 Arcueil Cedex (FR)**

(56) References cited:
**WO-A-92/10874          US-A- 4 400 641**
**US-A- 4 959 580         US-A1- 2002 017 831**
**US-A1- 2002 033 651     US-A1- 2005 012 433**

## Description

*Field of the* Invention

The present invention is directed to a piezoelectric generator of mechanical vibrations for a piezoelectric motor as defined in independent claim 1 and a corresponding piezoelectric motor as defined in claim 5.

The invention relates to design, as a rule, high-frequency piezoelectric generators of radial mechanical vibrations and such fast-acting piezoelectric motors based on these generators, which are meant to equipping preferably precision machines operating in the "start-stop" or quasi-continuous mode, for example:

> drives of machines for making of cutting instruments based on separate diamond crystals, sharpening of micro-surgical instruments, boring and polishing of ruby stones for mechanical or electromechanical wrist and pocket watches;
> drives of valves with turning (mainly spherical) valve cores for high-accuracy regulation of streams of fluid media based on a liquid and/or gas in chemical and physical scientific laboratories, in pharmaceutical industry and in production of chemical reagents;
> actuating units of micro-robots used in production of integral microcircuits, in genetic engineering for manipulations inside separate living cells etc.

*Background Art*

A piezoelectric generator of radial mechanical (in particular, sound and, especially, ultrasonic) vibrations serves as basis of any piezoelectric motor. Operating frequency of such generator (and output power of the respective motor as a whole) can be easily regulated in wide range using well-known controlled pulse current sources.

Such generator is mounted within a sound-proof stator of the piezoelectric motor and kinematically assembled with its rotor by a suitable mechanical transmission. Usually this generator is made as a flat three-layer ring that comprises of a piezoelectric core, material of which is, as a rule, polarised at right angles to their flanks, and such electroconductive coverings of said core's flanks, each of which serves as electrode and is equipped with means for connecting to a pulse current source.

When electric impulses feed said electrodes of said ring it vibrates in radial direction, i.e. reduces and expands in turn. Natural frequency $F_n$ of vibrations of the ring may be determined on a formula:

$$(1) \quad F_n \approx \frac{1}{ad\pi} \sqrt{\frac{n^2 + 1}{\rho * s_{jk}}} \, ,$$

where

> $d$ - middle diameter of the (in particular, piezoelectric) ring;
> $s_{jk}$ - resilience value of the (in particular, piezoelectric) material;
> $a$ - determinate experimentally shape factor of the (in particular, piezoelectric) ring;
> $p$ - density of the (in particular, piezoelectric) material of the ring;
> $n = (0,1,2,3.)$ - number of vibrations mode

(see Смагин А.Г. Прецизионные кварцевые резонаторы. - М.: Издательство Государственного Комитета Стандартов , Мер и Измерительных Приборов CCCP, 1964, c.63; in English - Smagin A.G. Precision quartz resonators. - Moscow, Publishing House of State Committee of Standards, Measures and Measuring Devices of the USSR, 1964, p.63).

It is understood for each person skilled in art that efficiency of each piezoelectric motor depends substantially:

> first, from availability of piezoelectric generator to work in the resonance mode over a long period of time, and,
> second, from Q-quality of oscillatory circuit as a whole, i.e. from ratio of its forced vibrations amplitude at the resonance mode to their amplitude in absence the resonance.

Unfortunately, it is well-known, that -

acoustic resonance destroys a solid body the rather the less limit of elasticity (and, accordingly, the more fragility) of a material used for its fabrication,
practically all modern piezoelectric materials reveal fragility on a large temperature range, and
piezoelectric generators of radial mechanical vibrations made as described above three-layered flat rings reveal Q-quality in the range from 10 to 100.

*For information* we will note that Q-quality of separate parts of oscillate circuits may be determined on a formula

$$(2) \qquad Q = \pi F t,$$

where

**F-** frequency of forced vibrations, and
**t** - time of reduction of vibrations amplitude in «**e**» times after switching of a pulse current source.

Fastness of flat ring piezoelectric generators to destruction may be increased by use of restraining hoops, as it was proposed, for example, by Yaroshenko and Lavrinenko in the known patent application (Pub. No: US 2002/0033651 A1 from March, 21 2002).

However, Q-quality of such piezoelectric generators usually does not exceed 10, and so their principal advantage before analogues consists in ease of disassembling and assembling of stators during repairs of piezoelectric motors.

Accordingly, available in the market piezoelectric motors reveal, as a rule, slow speed (of a few revolutions per minute) and angular resolution up to a few angular minutes.

Thus, piezoelectric generators equipped with complementary metallic resonators and piezoelectric motors on their basis are more preferable. They are known also from prior Yaroshenko's and Lavrinenko's patent application (Pub. No: US 2002/0017831 A1 from February, 14 2002).

The known piezoelectric generator of mechanical vibrations contains:

a flat piezoelectric ring which has relatively small external diameter and serves in itself as the active source of radial mechanical vibrations, and
two massive metallic ring-like electrodes, which are equipped with means for connecting to a pulse current source and acoustically tightly attached to flank surfaces of said piezoelectric ring through ring-like sound-conducting gaskets.

The external diameter of each of these electrodes exceeds substantially the external diameter of piezoelectric ring, and one of said electrodes is equipped at the periphery by at least one resilient bent pusher for rotation of the piezoelectric motor's rotor. Thus, these electrodes, which have in itself Q-quality more than 100, serve, when said generator operates, as complementary resonators and partly increase Q-quality and operating reliability of such generator as a whole.

The known piezoelectric motor contains:

(1) a stand having a cylindrical raised portion with a round through hole,
(2) a sound-proof stator which is rigidly fastened to said cylindrical raised portion and contains the described above piezoelectric generator (one of the electrodes of which is equipped at the periphery by at least one resilient bent pusher), and
(3) a rotor containing an output shaft, a part of which is placed in a bearing inwardly of said cylindrical raised portion, and a cylinder, which is rigidly assembled with said shaft and the internal wall of which is contacted with said resilient bent pusher.

However, said relatively small piezoelectric ring can not effectively vibrate said two massive relatively large-size metallic ring-like electrodes.

Accordingly, known piezoelectric generator has Q-quality significantly less than 100. Therefore, any piezoelectric motor based on this generator reveal angular speed about ten revolutions per minute and angular resolution no less than one angular minute.

Similar problems also lie in other prior art piezoelectric generators such as the one disclose by Brady patent application (Pub N°: US 2005/0012433)

*Summary of the Invention*

The invention is based on the problem of creation - by improvement of relationship between the active piezoelectric source of radial mechanical vibrations and complementary metallic resonator - such piezoelectric generator and such piezoelectric motors based thereon, which would have high Q-quality of oscillatory circuit and, accordingly, increased operating speed and accuracy of angular resolution.

In order to solve this problem, the present invention provides a piezoelectric generator of mechanical vibrations for a piezoelectric motor as defined in independent claim 1.

In this piezoelectric generator the dimensions and mass of active source of radial mechanical vibrations are near to the dimensions and mass of complementary metallic resonator. Therefore, practically all power of mechanical vibrations generated by said flat ring made from piezoelectric material expends on acoustic vibrations of said complementary resonator having Q-quality about 1000. Accordingly, proposed piezoelectric generator as a whole gains Q-quality up to 1000 too. This increases substantially fast-acting and angular resolution of piezoelectric motors based on such generators.

First additional feature consists in that geometrical dimensions of all parts of said active source of radial mechanical vibrations and said complementary ring-like metallic resonator, and density and resilience of materials used for their making are selected under condition of coincidence of zero mode of their radial vibrations. Realisation of this condition provides maximally possible amplitude of radial vibrations of any complementary ring-like metallic resonator used as part of the piezoelectric generator of every dimension-type.

Next additional features consist -

either in that the natural frequency ($F_{cmr}$) of said complementary ring-like metallic resonator and the natural frequency ($F_{as}$) of said active source of radial mechanical vibrations coincide practically at zero vibrations mode (in order to provide maximally possible coefficient of efficiency of the piezoelectric generator),

or in that the natural frequency ($F_{cmr}$) of said complementary ring-like metallic resonator exceeds at zero vibrations mode the natural frequency ($F_{as}$) of said active source of radial mechanical vibrations, and such excess is selected in the range from 10 kHz to 15 kHz (in order to augment operating reliability of the piezoelectric generator).

The present invention further provides a corresponding piezoelectric motor as defined in claim 5.

The Q-quality of oscillatory circuit of said high-frequency piezoelectric generator is about 1000. Therefore, described above piezoelectric motor based on this generator can provide angular speed up to a few ten revolutions per minute and angular resolution less than 0,5 angular second. Because said motor is equipped with one stationary piezoelectric generator, the output shaft of this motor is capable to single-direction running only.

The first additional feature consists in that said means for compression of said active source of radial mechanical vibrations, said ring-like sound-conducting gasket and said complementary ring-like metallic resonator in the acoustically compact stack is formed as a pair *« anchor bolt - female* screw» in which the female screw is shaped as screw-thread hole in said stand, and the anchor bolt's head clasps all said parts at the time of their assembling and fixing. Such design of said means for compression is simplest in making and serviceable at the time of assembling or repair of the piezoelectric motor.

The second additional feature consists in that said means for torsion torque takeoff is formed as a circular cylinder, the wall of which surrounds said complementary ring-like metallic resonator.

The third additional feature consists in that said complementary ring-like metallic resonator is equipped with at least by two resilient bent pushers which are located on practically equal angular distances. Growth of number of said pushers promotes balancing of said piezoelectric motor and lowers probability of slipping of the rotor in relation to the stator.

It is clear for each person skilled in art that the described embodiments of its realisation in no way limit the scope of rights. The scope of the present invention is defined by the appended claims.

*Brief Description of the Drawings*

The invention will now be explained by detailed description of the proposed piezoelectric generator and piezoelectric motors and their operation with references to the accompanying drawings, wherein:

Fig.1 shows proposed piezoelectric generator and simplest motor on its basis (longitudinal section on the axis of symmetry);

Fig.2 shows view in the arrow **A** (Fig.1), i.e. the part of contact area of the pushers placed at the periphery of complementary metallic resonator with internal side of the wall of the cylindrical part of the piezoelectric motor's rotor;

Fig.3 shows reversible piezoelectric motor based on two proposed piezoelectric generators and a common rotor (longitudinal section on the axis of symmetry).

*The Best Embodiments of the Invention*

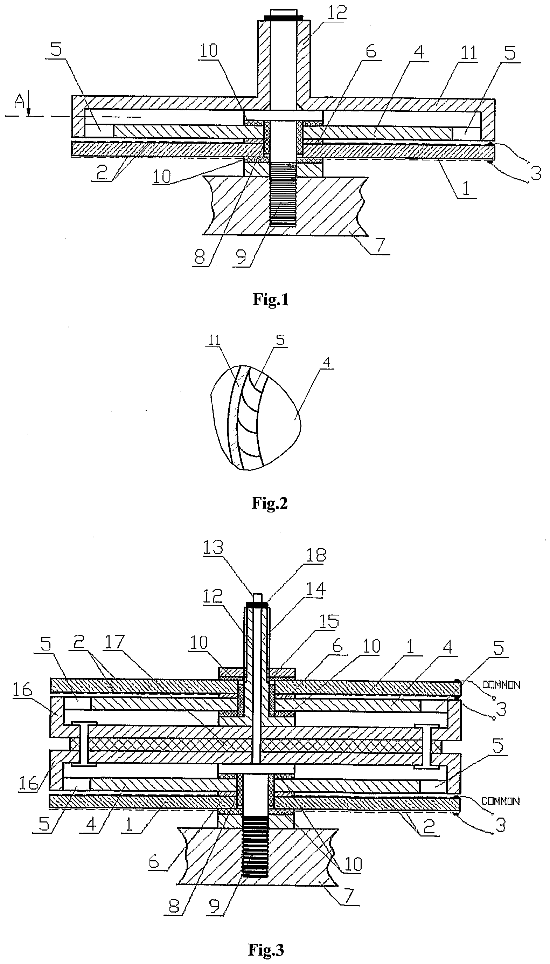

A piezoelectric generator of mechanical vibrations (see Figs 1, and 3) contains of:

an active source of radial mechanical vibrations, including a flat ring 1 made from suitable piezoelectric material which is polarised at right angles to the ring's 1 flanks, and two thin-walled ring-like electrodes 2 each of which is equipped with means 3 for connecting to a pulse current source and acoustically tightly attached to the ring's 1 flanks practically on all their area,

a complementary ring-like metallic resonator 4, which is located from one side of the ring 1 and equipped at periphery with at least one resilient bent pusher 5 (see Fig.2) for the rotation of described further rotor of any piezoelectric motor according to the invention;

a such ring-like sound-conducting gasket 6 placed between this complementary resonator 4 and one of said thin-walled ring-like electrodes 2, the external diameter of which does not exceed the half of external diameter of said complementary resonator 4, and

a described further suitable means for compression of mentioned above the ring 1 and the electrodes 2, the gasket 6 and the complementary resonator 4 in an acoustically compact stack.

Such stacks can serve as basis of various piezoelectric motors.

It is desirable when geometrical dimensions of the ring 1 and the electrodes 2 of said active source of radial mechanical vibrations and of said complementary ring-like metallic resonator 4, and density and resilience of materials used for their making are selected under condition of coincidence of zero mode of their radial vibrations.

It is desirable also, that at zero vibrations mode -

either the natural frequency ($F_{cmr}$) of the complementary ring-like metallic resonator 4, and the natural frequency ($F_{as}$) of the ring 1 and the electrodes 2 of said active source of radial mechanical vibrations coincide practically,

or the natural frequency ($F_{cmr}$) of the complementary resonator 4 exceeds the natural frequency ($F_{as}$) of the ring 1 and the electrodes 2 of said active source of radial mechanical vibrations, and such excess is selected in the range from 10 kHz to 15 kHz.

It is expedient, when the width ($b_g$) of said sound-conducting gasket 6, the width ($B_{pr}$) of said flat ring 1 made from piezoelectric material and the width ($B_{cmr}$) of said complementary ring-like metallic resonator 4 are selected under conditions:

$$3b_g \leq B_{pr} ,$$

and

$$3b_g \leq B_{cmr},$$

and the diameters of the holes in the ring 1 and the electrodes 2 of said active source of radial mechanical vibrations, of said sound-conducting gasket 6, and of said complementary ring-like metallic resonator 4 coincide practically.

Usefully, if the external and internal radiuses of the ring 1 and the electrodes 2 of the active source of radial mechanical vibrations and complementary ring-like metallic resonator 4 are selected under the condition

$$v_{ssp} / (R_{as} + r_{as}) \approx v_{ssm} / (R_{cmr} + r_{cmr}),$$

where

$v_{ssp}$ - sound speed in piezoelectric material of the active source of radial mechanical vibrations,

$R_{as}$ and $r_{as}$ - accordingly external and internal radiuses of this source,

$v_{ssm}$ - sound speed in material of the complementary ring-like metallic resonator,

$R_{cmr}$ and $r_{cmr}$ - accordingly external and internal radiuses of this resonator.

And, finally, it is desirable if piezoelectric material for making of the ring 1 is selected from group consisting of barium titanate, lead titanate, sodium tantalate, potassium tantalate, lead zirconate-titanate, lead-strontium zirconate-titanate, barium-lead zirconate-titanate, strontium zirconate-titanate.

The simplest proposed piezoelectric motor, that is meant to single-directional rotation (see Fig.1), has a plate-shaped stand 7, and such sound-proof stator 8, which is rigidly assembled with said stand 7 and contained:

> one described above stationary piezoelectric generator,
> an anchor bolt 9, which together with not designated especially blind or reach-through screw-thread hole in the stand 7 (or smooth through hole in this stand 7 and external female screw) serves as means for compression of mentioned above the ring 1 and the electrodes 2 of the active source of radial mechanical vibrations, said sound-conducting gasket 6 and said complementary ring-like metallic resonator 4 in the acoustically compact stack,
> at least one sound-proof gasket 10 that acoustically separates said stationary piezoelectric generator (see their parts 1 and 2, 6 and 4 on Fig.1) from said anchor bolt 9 and said stand 7, and
> a rotor that is capable rotate in respect of said stand 7 and said stator 8 and contains a such means for torsion torque takeoff that is shaped preferably as a circular cylinder 11, and output shaft 12 that is rigidly assembled with said cylinder 11.

The wall of the cylinder 11 surrounds the complementary ring-like metallic resonator 4 and engaged frictionally on the inside with said at least one resilient bent pusher 5 located at periphery of this resonator 4.

Upper part of the anchor bolt's 9 head serves as a slide bearing immediately or as a support for such bearing.

It is clear for each person skilled in art that -
the optimally required number of resilient bent pushers 5 may be defined taking into consideration the value of transmitted torsion torque and constant of sliding friction for the pair «*material of the* pusher(s) 5 - *material of the cylinder 11*», and
two or more of such pushers 5 must be arranged at the periphery of said complementary ring-like metallic resonator 4 on practically equal angular distances.

A compound reversible piezoelectric motor (see Fig.3) has a stand 7 and such coaxially located units, as:

> described above sound-proof stator 8, equipped with a slightly modified stationary piezoelectric generator,
> a described below sound-proof rotor equipped with a such rotary piezoelectric generator, which is centred and arranged with an axial gap in relation to said stator 8, and
> a described below friction coupling, which is -
>
> > located in said axial gap between said stator 8 and mentioned above rotor, and
> > capable for rotation or stopping in relation to said stand 7,

This coupling is centred in relation to stator 8 and constantly engaged with said resilient bent pushers 5 of both said complementary ring-like metallic resonators 4 of said stationary and rotary piezoelectric generators.

The stationary piezoelectric generator shown on Fig.3 differs from the similar generator shown on Fig.1 to those, that the anchor bolt's 9 head is equipped with a round centring rod 13.

Sound-proof rotor, which is placed on this rod 13 (usually by means of not shown here a suitable slide bearing), contains a tubular output shaft 14 equipped in lower part with a not designed especially supporting flange and mentioned above rotary piezoelectric generator.

All parts of this generator (namely, piezoelectric ring 1 with ring-like electrodes 2, sound-conducting gasket 6 and complementary ring-like metallic resonator 4) are propped against the mentioned flange of tubular output shaft 14 and compressed in the acoustically compact stack by such means, as, for example, a screwed cap 15 arranged on screw-thread part of the tubular output shaft 14. Lower part of the flange of this shaft 14 serves as a slide bearing or as a support for such bearing.

Screwed cap 15 and tubular output shaft 14 are separated acoustically from said parts 1 and 2, 6 and 4 of rotary piezoelectric generator by sound-proof gaskets 10. The tubular output shaft 14 is fixed on the centring rod 13 from axial displacement (for example, by a female screw 16 arranged on screwed shank of said rod 13).

Said frictional coupling is shaped usually as entire or composite circular cylinder 17, middle part of which is equipped with at least one crosspiece 18 for placing on said centring rod 13. In particular, Fig.3 shows such frictional coupling that consists of two metallic thimbles, bottom parts of which are rigidly assembled (for example, by riveting) using a not designated especially additional sound-proof gasket.

It is clear for each person skilled in art that -
the number of the resilient bent pushers 5, which is optimally required for the equipment of each said complementary ring-like metallic resonator 4, may be defined taking into consideration the value of transmitted torsion torque and constant of sliding friction for the pair *«material of the pusher(s) 5 - material of the cylinder 16»,* and
two or more such pushers 5 must be arranged at the periphery of each said complementary ring-like metallic resonator 4 on practically equal angular distances.

Described piezoelectric generator as such operates in any piezoelectric motor as follows.

When electric impulses feed the thin-walled ring-like electrodes 2, the piezoelectric ring 1 reduces and expands in turn in radial direction with frequency which is practically equal to operating frequency of used pulse current source.

The sound-conducting gasket 6 transmits mechanical vibrations of said piezoelectric ring 1 to the complementary ring-like metallic resonator 4, which also reduces and expands in turn in radial direction. Mechanical vibrations of this resonator 4 force arranged on its periphery resilient bent pushers 5, which are engaged with an arbitrary means for torsion torque takeoff, to cyclically repetitive hogging and straightening, and, as a result, to rotation of said means.

Circular cylinder 11, which takes off torsion torque in the simplest piezoelectric motor (see Fig.1), immediately rotates the output shaft 12 in one direction.

In a reversible piezoelectric motor (see Fig.3) the stationary and the rotary piezoelectric generators operate by turns.

In fact, when the stationary piezoelectric generator of mechanical vibrations, which is part of the stator 8, operates, resilient bent pushers 5 of the immobile complementary ring-like metallic resonator 4 interact with lower part of circular cylinder 17, which serves as basis of frictional coupling. As was stated above, this coupling is constantly engaged with resilient bent pushers 5 of the mobile complementary resonator 4, which belongs to the rotary piezoelectric generator of mechanical vibrations. Therefore, said frictional coupling (including the circular cylinder 17 and the crosspiece 18) rotates around centring rod 13 and revolves the rotor (including de-energised rotary piezoelectric generator and tubular output shaft 14) in one beforehand prescribed direction.

Disconnection of the stationary piezoelectric generator from the pulse current source provides the stop of tubular output shaft 14 and stoppage of the frictional coupling, as resilient bent the pushers 5 of the immobile complementary resonator 4 fix the circular cylinder 17 and the crosspiece 18 in relation to the stator 8 and the stand 7.

Connection of rotary piezoelectric generator to the pulse current source causes the cyclically repetitive hogging and straightening of the resilient bent pushers 5 of the mobile complementary resonator 4 and pushing away of this resonator 4 together with the other parts of rotor from the stopped circular cylinder 17. Hereupon the tubular output shaft 14 is revolved around centring rod 13 in direction, which is reverse to initial direction.

*Industrial Applicability*

Piezoelectric generators and motors according to the invention can be easily made in many of the present instrument-making plants using available in the world market materials. In particular, the experimental reversible motors, each of which had mass 220 grams and which are meant for equipping of micro-drives of scientific devices, were made.

These motors are designed for maximal power consumption 6 W at output voltage of a pulse current source 12 V and reveal the following operational characteristics:

| | |
|---|---|
| Q-quality of oscillatory circuit | ~1000 |
| angular resolution, angular second | 0,4 |
| maximal torsion torque, Nm..................../ | 1,5 |
| torque of self-braking, Nm | 1,0 |
| maximal angular speed, revolutions per minute | 80,0 |
| range of speeds, number of stages | 6 |
| response time, mivroseconds | 20-30 |
| drift of positioning, angular seconds per hour | 1-2 |
| acceleration capability, milliseconds | 0,3 |
| reversak time, milliseconds | 0,1 |

**Claims**

1.  A piezoelectric generator of mechanical vibrations for a piezoelectric motor comprising:

> an active source of radial mechanical vibrations, including a flat ring (1) made from piezoelectric material which is polarized at right angles to the ring's flanks, and two thin-walled ring-like electrodes (2) each of which is equipped with a means (3) for connecting to a pulse current source and acoustically tightly attached to the ring's flanks practically on all their area;
> a complementary ring-like metallic resonator (4) which is located on one side of said flat ring (1) and equipped at the periphery with at least one resilient bent pusher (5) for rotation of a piezoelectric motor's rotor;
> a ring-like sound-conducting gasket (6) placed between said complementary ring-like metallic resonator (4) and one of said electrodes (2), wherein the external diameter of said ring-like sound-conducting gasket (6) does not exceed half of the external diameter of said complementary resonator (4); and

7

a suitable means (9) for compression of said active source of radial mechanical vibrations, said ring-like sound-conducting gasket (6) and said complementary ring-like metallic resonator (4) in an acoustically compact stack, wherein the active source of radial mechanical vibrations is an active source of zero-order radial-mode vibrations, and the radial mechanical vibrations produced by the active source of radial mechanical vibrations are transmitted to said single complementary ring-like metallic resonator (4).

2. The piezoelectric generator according to claim 1, wherein a zero-order radial vibration mode of said active source of radial mechanical vibrations and a zero-order radial vibration mode of said complementary ring-like metallic resonator are substantially equal.

3. The piezoelectric generator according to claim 2, wherein a natural frequency ($F_{cmr}$) of the zero-order radial vibration mode of said complementary ring-like metallic resonator and a natural frequency ($F_{as}$) of the zero-order radial vibration mode of said active source of radial mechanical vibrations are substantially equal.

4. The piezoelectric generator according to claim 2, wherein a natural frequency ($F_{cmr}$) of the zero-order radial vibration mode of said complementary ring-like metallic resonator exceeds a natural frequency ($F_{as}$) of the zero-order radial vibration mode of said active source of radial mechanical vibrations by from 10 kHz to 15 kHz.

5. A piezoelectric motor comprising:

a stand (7);
a sound-proof stator (8) that is rigidly assembled with said stand (7) and equipped with a stationary piezoelectric generator according to claim 1; and a rotor that is capable of rotation in relation to said stand (7) and said sound-proof stator (8) and contains:

a means (11) for torsion torque takeoff that is engaged frictionally with said at least one resilient bent pusher (5) located at a periphery of said complementary ring-like metallic resonator (4); and
an output shaft (12) that is rigidly assembled with said means (11) for torsion torque takeoff.

6. The piezoelectric motor according to claim 5, wherein said means for compression of said active source of radial mechanical vibrations, said ring-like sound-conducting gasket and said complementary ring-like metallic resonator in the acoustically compact stack is formed as a pair "anchor bolt - female screw" in which the female screw is shaped as screw-thread hole in said stand, and the anchor bolt's head clasps all said parts at the time of their assembling and fixing.

7. The piezoelectric motor according to claim 5 or claim 6, wherein said means for torsion torque takeoff is formed as a circular cylinder, the wall of which surrounds said complementary ring-like metallic resonator.

8. The piezoelectric motor according to claim 5 or claim 6 or claim 7, wherein said complementary resonator is equipped at least by two resilient bent pushers which are located on practically equal angular distances.


**Patentansprüche**

1. Piezoelektrischer Erzeuger von mechanischen Schwingungen für einen piezoelektrischen Motor, wobei der piezoelektrische Erzeuger Folgendes umfasst:

eine aktive Quelle radialer mechanischer Schwingungen, die einen flachen Ring (1), der aus einem piezoelektrischen Material hergestellt ist, das in rechten Winkeln zu den Flanken des Rings polarisiert ist, und zwei dünnwandige ringartige Elektroden (2), deren jede mit einem Mittel (3) zum Verbinden mit einer Pulsstromquelle ausgestattet und praktisch an ihrer gesamten Fläche akustisch eng an den Flanken des Rings befestigt ist, einschließt,
einen komplementären ringartigen metallischen Resonator (4), der an einer Seite des flachen Rings (1) angeordnet und an dem Umfang mit mindestens einem elastischen gebogenen Mitnehmer (5) zur Drehung eines Rotors eines piezoelektrischen Motors ausgestattet ist,
eine ringartige Schall leitende Dichtung (6), die zwischen dem komplementären ringartigen metallischen Resonator (4) und einer der Elektroden (2) platziert ist, wobei der Außendurchmesser der ringartigen Schall leitenden Dichtung (6) nicht die Hälfte des Außendurchmessers des komplementären ringartigen metallischen Resonators (4) überschreitet, und

ein geeignetes Mittel (9) zum Zusammendrücken der aktiven Quelle radialer mechanischer Schwingungen, der ringartigen Schall leitenden Dichtung (6) und des komplementären ringartigen metallischen Resonators (4) in einem akustisch kompakten Stapel, wobei die aktive Quelle radialer mechanischer Schwingungen eine aktive Quelle von Radialmodus-Schwingungen nullter Ordnung ist und die radialen mechanischen Schwingungen, die durch die aktive Quelle radialer mechanischer Schwingungen erzeugt werden, zu dem einzigen komplementären ringartigen metallischen Resonator (4) weitergeleitet werden.

2. Piezoelektrischer Erzeuger nach Anspruch 1, wobei ein Radialschwingungsmodus nullter Ordnung der aktiven Quelle radialer mechanischer Schwingungen und ein Radialschwingungsmodus nullter Ordnung des komplementären ringartigen metallischen Resonators im Wesentlichen gleich sind.

3. Piezoelektrischer Erzeuger nach Anspruch 2, wobei eine Eigenfrequenz ($F_{cmr}$) des Radialschwingungsmodus nullter Ordnung des komplementären ringartigen metallischen Resonators und eine Eigenfrequenz ($F_{as}$) des Radialschwingungsmodus nullter Ordnung der aktiven Quelle radialer mechanischer Schwingungen im Wesentlichen gleich sind.

4. Piezoelektrischer Erzeuger nach Anspruch 2, wobei eine Eigenfrequenz ($F_{cmr}$) des Radialschwingungsmodus nullter Ordnung des komplementären ringartigen metallischen Resonators eine Eigenfrequenz ($F_{as}$) des Radialschwingungsmodus nullter Ordnung der aktiven Quelle radialer mechanischer Schwingungen um 10 kHz bis 15 kHz überschreitet.

5. Piezoelektrischer Motor, der Folgendes umfasst:

einen Ständer (7),

einen schalldichten Stator (8), der starr mit dem Ständer (7) zusammengebaut und mit einem unbeweglichen piezoelektrischen Erzeuger nach Anspruch 1 ausgestattet ist, und

einen Rotor, der zu einer Drehung im Verhältnis zu dem Ständer (7) und dem schalldichten Stator (8) in der Lage ist und Folgendes enthält:

ein Mittel (11) zur Verdrehungsmoment-Abnahme, das reibschlüssig mit dem mindestens einen elastischen gebogenen Mitnehmer (5) in Eingriff gebracht ist, der an einem Umfang des komplementären ringartigen metallischen Resonators (4) angeordnet ist, und

eine Abtriebswelle (12), die starr mit dem Mittel (11) zur Verdrehungsmoment-Abnahme verbunden ist.

6. Piezoelektrischer Motor nach Anspruch 5, wobei das Mittel zum Zusammendrücken der aktiven Quelle radialer mechanischer Schwingungen, der ringartigen Schall leitenden Dichtung und des komplementären ringartigen metallischen Resonators in dem akustisch kompakten Stapel als ein Paar "Ankerbolzen-Schraubenmutter" geformt ist, bei dem die Schraubenmutter als ein Schraubengewindeloch in dem Ständer geformt ist und der Kopf des Ankerbolzens zum Zeitpunkt ihres Zusammenbauens und Befestigens alle Teile klammert.

7. Piezoelektrischer Motor nach Anspruch 5 oder Anspruch 6, wobei das Mittel zur Verdrehungsmoment-Abnahme als ein Kreiszylinder geformt ist, dessen Wand den komplementären ringartigen metallischen Resonator umgibt.

8. Piezoelektrischer Motor nach Anspruch 5 oder Anspruch 6 oder Anspruch 7, wobei der komplementäre Resonator mit mindestens zwei elastischen gebogenen Mitnehmern ausgestattet ist, die in praktisch gleichen Winkelabständen angeordnet sind.

**Revendications**

1. Générateur piézoélectrique de vibrations mécaniques pour un moteur piézoélectrique, le générateur piézoélectrique comprenant :

une source active de vibrations mécaniques radiales, incluant un anneau plat (1) fabriqué à partir d'un matériau piézoélectrique qui est polarisé à angles droits par rapport aux flancs de l'anneau, et deux électrodes de forme annulaire à parois minces (2), dont chacune est équipée d'un moyen (3) pour la connexion à une source de courant de pulsation et fixée fermement de manière acoustique aux flancs de l'anneau, pratiquement sur l'ensemble de sa surface ;

un résonateur métallique de forme annulaire complémentaire (4) disposé sur un côté dudit anneau plat (1) et équipé au niveau de la périphérie d'au moins un poussoir coudé élastique (5) pour faire tourner un rotor du moteur piézoélectrique ;

un joint d'étanchéité de forme annulaire conducteur de son (6) placé entre ledit résonateur métallique de forme annulaire complémentaire (4) et l'une desdites électrodes (2), dans lequel le diamètre extérieur dudit joint d'étanchéité conducteur de son de forme annulaire (6) ne dépasse pas la moitié du diamètre extérieur dudit résonateur métallique de forme annulaire complémentaire (4) ; et

un moyen approprié (9) pour la compression de ladite source active de vibrations mécaniques radiales, dudit joint d'étanchéité conducteur de son de forme annulaire (6) et dudit résonateur métallique de forme annulaire complémentaire (4) dans un empilement acoustiquement compact, dans lequel la source active de vibrations mécaniques radiales est une source active de vibrations de mode radial d'ordre zéro, et les vibrations mécaniques radiales produites par la source active de vibrations mécaniques radiales sont transmises vers ledit seul résonateur métallique de forme annulaire complémentaire (4).

2. Générateur piézoélectrique selon la revendication 1, dans lequel un mode de vibrations radiales d'ordre zéro de ladite source active de vibrations mécaniques radiales et un mode de vibrations radiales d'ordre zéro dudit résonateur métallique de forme annulaire complémentaire sont sensiblement égaux.

3. Générateur piézoélectrique selon la revendication 2, dans lequel une fréquence propre ($F_{cmr}$) du mode de vibrations radiales d'ordre zéro dudit résonateur métallique de forme annulaire complémentaire et une fréquence propre ($F_{as}$) du mode de vibrations radiales d'ordre zéro de ladite source active de vibrations mécaniques radiales sont sensiblement égaux.

4. Générateur piézoélectrique selon la revendication 2, dans lequel une fréquence propre ($F_{cmr}$) du mode de vibrations radiales d'ordre zéro dudit résonateur métallique de forme annulaire complémentaire dépasse une fréquence propre ($F_{as}$) du mode de vibrations radiales d'ordre zéro de ladite source active de vibrations mécaniques radiales de 10 kHz à 15 kHz.

5. Moteur piézoélectrique, comprenant :

un bâti (7) ;

un stator insonorisé (8) qui est assemblé de manière rigide avec ledit bâti (7) et équipé d'un générateur piézoélectrique stationnaire selon la revendication 1 ; et

un rotor qui est capable de tourner par rapport audit bâti (7) et audit stator insonorisé (8) et contenant :

un moyen (11) pour la transmission du couple de torsion qui est engagé par friction dans ledit au moins un poussoir coudé élastique (5) disposé au niveau d'une périphérie dudit résonateur métallique de forme annulaire complémentaire (4) ; et

un arbre de sortie (12) assemblé de manière rigide avec ledit moyen (11) de transmission du couple de torsion.

6. Moteur piézoélectrique selon la revendication 5, dans lequel ledit moyen de compression de ladite source active de vibrations mécaniques radiales, dudit joint d'étanchéité conducteur de son de forme annulaire et dudit résonateur métallique de forme annulaire complémentaire dans l'empilement acoustiquement compact a la forme d'une paire de « boulon d'ancrage-vis creuse », dans lequel la vis creuse a la forme d'un trou taraudé dans ledit bâti, et la tête du boulon d'ancrage serre toutes lesdites parties lors de leur assemblage et de leur fixation.

7. Moteur piézoélectrique selon les revendications 5 ou 6, dans lequel ledit moyen de transmission du couple de torsion est un cylindre circulaire, dont la paroi entoure ledit résonateur métallique de forme annulaire complémentaire.

8. Moteur piézoélectrique selon les revendications 5 ou 6 ou 7, dans lequel ledit résonateur complémentaire est équipé d'au moins deux poussoirs coudés élastiques qui sont disposés à des distances angulaires pratiquement égales.

**Fig.1**

**Fig.2**

COMMON

COMMON

**Fig.3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020033651 A1
- US 20020017831 A1

- US 20050012433 A